# EUROPEAN PATENT APPLICATION

(11) **EP 1 613 001 A1**
(43) Date of publication of application: **04.01.2006**
(21) Application number: 05013846.0
(22) Date of filing: 27.06.2005
(51) Int. Cl.: H04L 12/437

(54) **Hybrid optical ring network**

(30) Priority: 29.06.2004 US 879555
(71) Applicant: FUJITSU LIMITED, Kawasaki-shi, Kanagawa 211-8588 (JP)
(72) Inventor: Kinoshita, Susumu, Fuchu-shi Tokyo 183-0032 (JP); Gumaste, Ashwin Anil, Dallas Texas 75252 (US)
(74) Representative: HOFFMANN EITLE

(57) **Abstract**

An optical network (10) includes an optical ring (16,18) that carries optical traffic in a plurality of wavelengths. The network also includes a number of passive add/drop nodes (12a-12d) that are coupled to the optical ring (16,18). The passive add/drop nodes (12a-12d) each include an optical coupler that is coupled to the optical ring (16,18) and that receives the optical traffic on the optical ring (16,18). The optical coupler both passively drops a copy of the optical traffic and passively forwards a copy of the same optical traffic along the optical ring (16,18). The add/drop nodes (12a-12d) do not terminate any portion of the optical traffic forwarded by the optical coupler. The network also includes a number of gateway nodes (14a-14d) that are each coupled to the optical ring (16,18). The gateway nodes (14a-14d) selectively pass or terminate each wavelength of the optical traffic. In addition, the network is configured such that the passive add/drop nodes (12a-12d) and the gateway nodes (14a-14d) are coupled to the optical ring (16,18) such that none of the passive add/drop nodes (12a-12d) are adjacent to one another in the optical ring (16,18).

## Description

### TECHNICAL FIELD OF THE INVENTION

The present invention relates generally to optical transport systems, and more particularly to a hybrid optical ring network.

### BACKGROUND

Telecommunications systems, cable television systems and data communication networks use optical networks to rapidly convey large amounts of information between remote points. In an optical network, information is conveyed in the form of optical signals through optical fibers. Optical fibers comprise thin strands of glass capable of transmitting the signals over long distances with very low loss.

Optical networks often employ wavelength division multiplexing (WDM) or dense wavelength division multiplexing (DWDM) to increase transmission capacity. In WDM and DWDM networks, a number of optical channels are carried in each fiber at disparate wavelengths. Network capacity is based on the number of wavelengths, or channels, in each fiber and the bandwidth, or size of the channels.

The typology in which WDM and DWDM networks are built plays a key role in determining the extent to which such networks are utilized. Ring topologies are common in today's networks. Add/drop nodes typically serve as network elements on such optical rings. These add/drop nodes are "active" nodes that typically include microelectro-mechanical switches (MEMS), arrayed waveguide gratings (AWGs), interleavers, and/or fiber gratings (FGs) to add and drop traffic from the ring and to multiplex and demultiplex traffic at add/drop nodes.

### SUMMARY

The present invention provides a hybrid optical ring network with passive nodes being separated by active nodes to provide for protection switching in the ring network.

In accordance with a particular embodiment of the present invention, an optical network includes an optical ring that carries optical traffic in a plurality of wavelengths. The network also includes a number of passive add/drop nodes that are coupled to the optical ring. The passive add/drop nodes each include an optical coupler that is coupled to the optical ring and that receives the optical traffic on the optical ring. The optical coupler both passively drops a copy of the optical traffic and passively forwards a copy of the same optical traffic along the optical ring. The add/drop nodes do not terminate any portion of the optical traffic forwarded by the optical coupler. The network also includes a number of gateway nodes that are each coupled to the optical ring. The gateway nodes selectively pass or terminate each wavelength of the optical traffic. In addition, the network is configured such that the passive add/drop nodes and the gateway nodes are coupled to the optical ring such that none of the passive add/drop nodes are adjacent to one another in the optical ring.

Technical advantages of one or more embodiments of the present invention include providing an improved optical ring network. In particular embodiments, such a network may include a number of passive add/drop nodes do not require the use of in-line rejection filters to block particular wavelengths of the optical traffic passing through the node and that are each separated by active gateways that can control the propagation of selected wavelengths around the network. This provides a low-cost and less passband-narrowing network that can provide protection switching without requiring the passive nodes to have in-line rejection filters and without requiring that the gateways nodes perform partial wavelength conversion. For purposes of comparison, a network that has passive nodes without in-line rejection filters, but that includes gateways nodes that perform partial wavelength conversion for certain protection switching functions is described in co-pending U.S. Application Serial No. 10/448,169.

It will be understood that the various embodiments of the present invention may include some, all, or none of the enumerated technical advantages. In addition, other technical advantages of the present invention may be readily apparent to one skilled in the art from the figures, description and claims included herein.

### BRIEF DESCRIPTION OF THE DRAWINGS

FIGURE 1 is a block diagram illustrating an optical network in accordance with one embodiment of the present invention;
FIGURE 2 is a block diagram illustrating details of an add/drop node in accordance with one embodiment of the present invention;
FIGURE 3 is a block diagram illustrating details of an optical coupler in accordance with one embodiment of the present invention;
FIGURE 4 is a block diagram illustrating details of an optical gateway in accordance with one embodiment of the present invention;
FIGURE 5 is a block diagram illustrating details of an optical gateway in accordance with another embodiment of the present invention;
FIGURE 6 is a block diagram illustrating example light paths from an add/drop node in an example optical network for providing Optical Unidirectional Path-Switched Ring (OUPSR) protection in accordance with one embodiment of the present invention;
FIGURE 7 is a block diagram illustrating example light paths from an optical gateway in an example optical network for providing OUPSR protection in accordance with one embodiment of the present invention;
FIGURE 8 is a block diagram illustrating example protected and preemptable signals in an example optical network in accordance with one embodiment of the present invention;
FIGURE 9 is a block diagram illustrating Optical Shared Path Protection Ring (OSPPR) protection switching of the protected signal in the network of FIGURE 8, in accordance with one embodiment of the present invention;
FIGURE 10 is a block diagram illustrating other example protected and preemptable signals in an example optical network in accordance with another embodiment of the present invention; and
FIGURE 11 is a block diagram illustrating OSPPR protection switching of the protected signal in the network of FIGURE 10, in accordance with one embodiment of the present invention.

### DETAILED DESCRIPTION

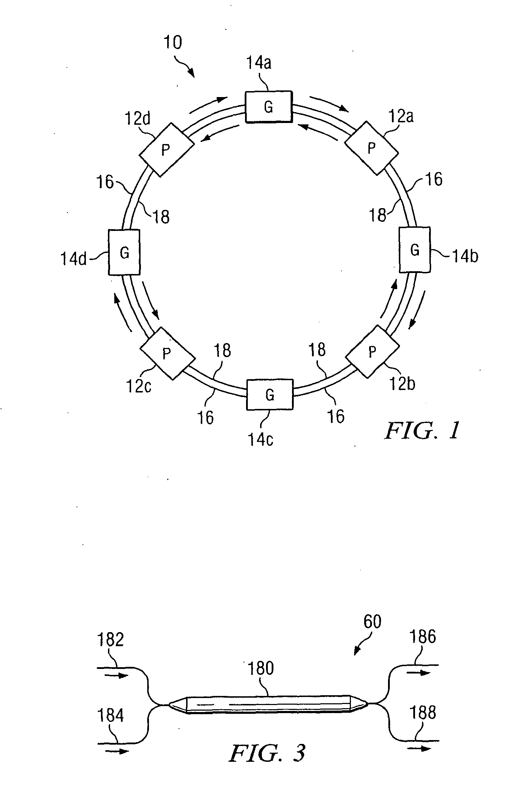

FIGURE 1 is a block diagram illustrating an optical network 10 in accordance with one embodiment of the present invention. Network 10 is an optical network in which an optical signal containing a number of optical channels is transmitted over the network 10. Each channel is able to carry different traffic over a common path in the disparate channels. Each channel is associated with a characteristic wavelength, and thus the terms "channel" and "wavelength" are used interchangeably herein where appropriate. Network 10 may be an wavelength division multiplexing (WDM), dense wavelength division multiplexing (DWDM), or other suitable multi-channel network. Network 10 may be used as a short-haul metropolitan network, a long-haul inter-city network, or any other suitable network or combination of networks.

In accordance with the illustrated embodiment, network 10 is an optical ring. An optical ring may include, as appropriate, a single, unidirectional fiber, a single, bi-directional fiber, or a plurality of uni- or bi-directional fibers. In the illustrated embodiment, network 10 includes a pair of unidirectional fibers or rings 16 and 18 each transporting traffic in opposite directions. Rings 16 and 18 connect a plurality of add/drop nodes (ADNs) 12 and optical gateways 14. In the particular embodiment illustrated in FIGURE 1 and certain other embodiments described herein, ADNs 12 and gateways 14 are coupled to rings 16 and 18 in an alternating manner. In other words, each ADN 12 is separated from the other ADNs 12 by at least one gateway 14. As will be described below, this separation allows for protection switching in network 10 without requiring that ADNs have in-line rejection filters and without requiring that gateways perform wavelength conversions of any signals.

Referring to FIGURE 1, optical information signals are transmitted in different directions on rings 16 and 18. The optical signals have at least one characteristic modulated to encode audio, video, textual, real-time, non-real-time and/or other suitable data. Modulation may be based on phase shift keying (PSK), intensity modulation (IM), or other suitable techniques.

In the illustrated embodiment, the first ring 16 is a clockwise ring in which traffic is transmitted in a clockwise direction. The second ring 18 is a counterclockwise ring in which traffic is transmitted in a counterclockwise direction. ADNs 12 are each operable to passively add and drop traffic to and from the rings 16 and 18. In particular, each ADN 12 receives traffic from its local clients and adds that traffic to the rings 16 and 18. At the same time, each ADN 12 receives traffic from the rings 16 and 18 and drops traffic destined for its local clients. As used throughout this description and the following claims, the term "each" means every one of at least a subset of the identified items. In adding and dropping traffic, each ADN 12 may combine data from its clients for transmittal in the rings 16 and 18 and may drop channels from the rings 16 and 18 for its clients. Traffic may be "dropped" by making the traffic available for transmission to the local clients. Thus, traffic may be dropped and yet continue to circulate on a ring.

ADNs 12 passively add traffic to and drop traffic from rings 16 and 18 without regard to the channel spacing of the traffic - thus providing "flexible" channel spacing. "Passively" in this context means the adding or dropping of channels without power, electricity, and/or moving parts. An "active" device would thus use power, electricity, or moving parts to perform work. In a particular embodiment of the present invention, traffic may be passively added to and/or dropped from the rings 16 and 18 by splitting signals from and combining signals to the signals carried around rings 16 and 18 without performing demultiplexing.

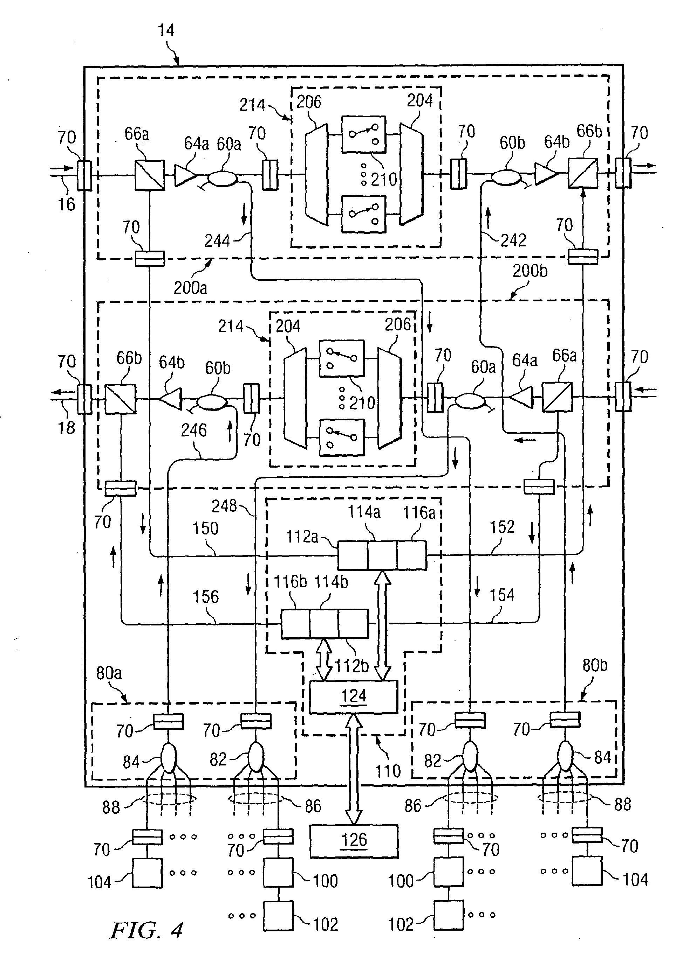

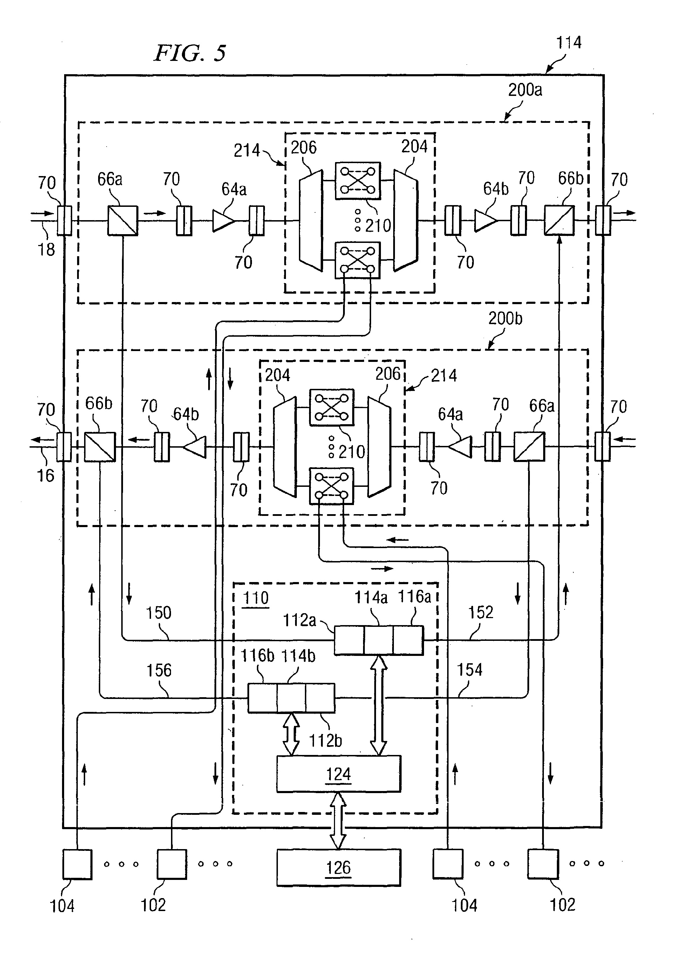

Gateways 14, on the other hand, demultiplex the optical signal received over rings 16 and 18 such that each channel of the optical signal may be selectively passed through or terminated by the gateway 14. In short, gateways may be used to terminate traffic channels that have reached their destination and to forward traffic channels that have not reached their destination. In certain embodiments, gateways 14 may also have add/drop capabilities similar to ADNs 12. Since ADNs 12 do not have an in-line rejection filter, a network 10 having all ADNs 12 would create interference since traffic would continually circle rings 16 and 18 even after reaching its destination(s). Therefore, gateways 14 are provided to prevent this interference - both during normal operations and during protection switching. Further details regarding these gateways are described below in reference to FIGURES 4 and 5.

In addition, rings 16 and 18 may be subdivided into sub-networks or "subnets" with a gateways 14 forming the boundary between adjacent subnets. A subnet may be defined as a subset of nodes (ADNs 12 and/or gateways 14) on a ring whose wavelengths are not isolated from each other and which may comprise traffic streams from nodes within the subnet, but whose wavelengths are isolated from traffic streams from other nodes on the ring, except for a portion of wavelengths (at least during normal operations) that transport traffic streams that pass through, enter or exit the subnet in order to reach their destination nodes.

Within each subnet, traffic is passively added to and passively dropped from the rings 16 and 18, channel spacing is flexible, and the nodes are free to transmit and receive signals to and from nodes within the subnet. Such traffic may be referred to as "intra-subnet traffic." Another portion of the traffic - "inter-subnet traffic" - may travel to and from nodes in another subnet. Such inter-subnet traffic traverses or travels within at least part of two subnets. Because an intra-subnet traffic stream utilizes its wavelength/channel only within the subnet in which it travels, the wavelength/channel used for intra-subnet traffic in one subnet may potentially be used in another subnet by another traffic stream. In this way, the overall capacity of the network may be increased, while maintaining flexible channel spacing within individual subnets. The implementation of subnets in this manner is described in detail in co-pending U.S. Application Serial No. 10/448,169, which is incorporated herein by reference. However, unlike the example embodiments illustrated in U.S. Application Serial No. 10/448,169, an implementation of subnets in network 10 of FIGURE 1 would likely involve using particular gateways 14 during normal operations to serve as the boundary between subnets, while other gateways 14 would be included within the subnets themselves and act as add/drop nodes (along with ADNs 12). For example, gateways 14a and 14c could serve as the boundaries between a first subnet that includes ADNs 12a and 12b and gateway 14b and a second subnet that includes ADNs 12c and 12d and gateway 14d. However, during protection switching operations, the gateways 14 operate as is described below, taking advantages of the alternating node configuration illustrated in FIGURE 1.

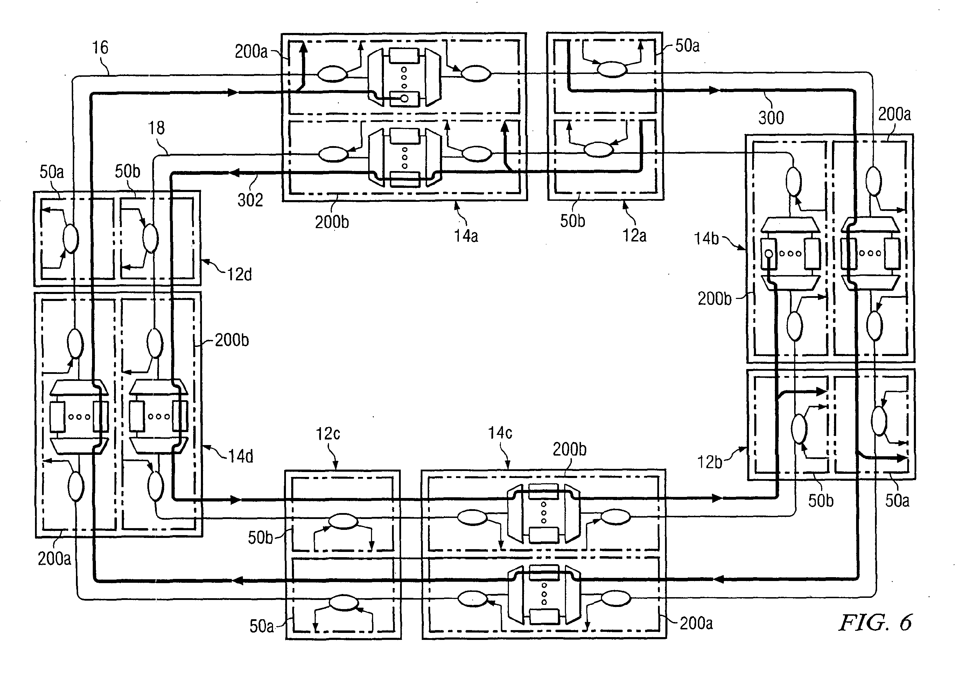

Signal information such as wavelengths, power and quality parameters may be monitored in ADNs 12, gateways 14, and/or by a centralized control system. Thus, ADNs 12 and gateways 14 may provide for circuit protection in the event of a line cut or other interruption in one or both of the rings 16 and 18. An optical supervisory channel (OSC) may be used by the nodes to communicate with each other and with the control system. In particular embodiments, as described further below with reference to FIGURES 6 through 7, network 10 may be an OUPSR network in which traffic sent from a first node (ADN 12 or gateway 14) to a second node is communicated from the first node to the second node over both rings 16 and 18. The second node may include components allowing the second node to select between the traffic arriving via rings 16 and 18 so as to forward to a local client(s) the traffic from the ring that has a lower bit error rate (BER), a higher power level, and/or any other appropriate and desirable characteristics. Alternatively, such components may select traffic from a designated ring unless that traffic falls below/above a selected level of one or more operating characteristics (in which case, traffic from the other ring may be selected). The use of such dual signals allows traffic to get from the first node to the second node over at least one of the rings 16 and 18 in the event of a line break or other damage to the other of the rings 16 and 18.

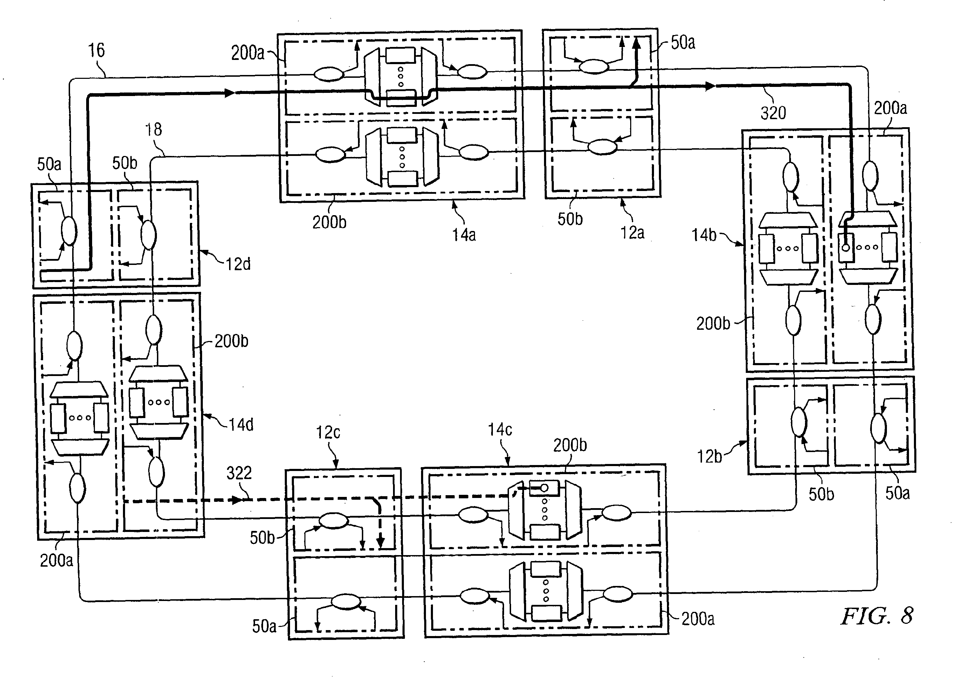

In other embodiments, network may be an OSPPR network in which one of rings 16 and 18 may be used as a back-up communication or protection path in the event that a communications on the other ring 16 or 18 are interrupted. When not being used in such a back-up capacity, the protection path may communicate other preemptable traffic, thus increasing the capacity of network 10 in such embodiments. Such an OSPPR protection scheme is described in further detail below in association with FIGURES 8 through 11.

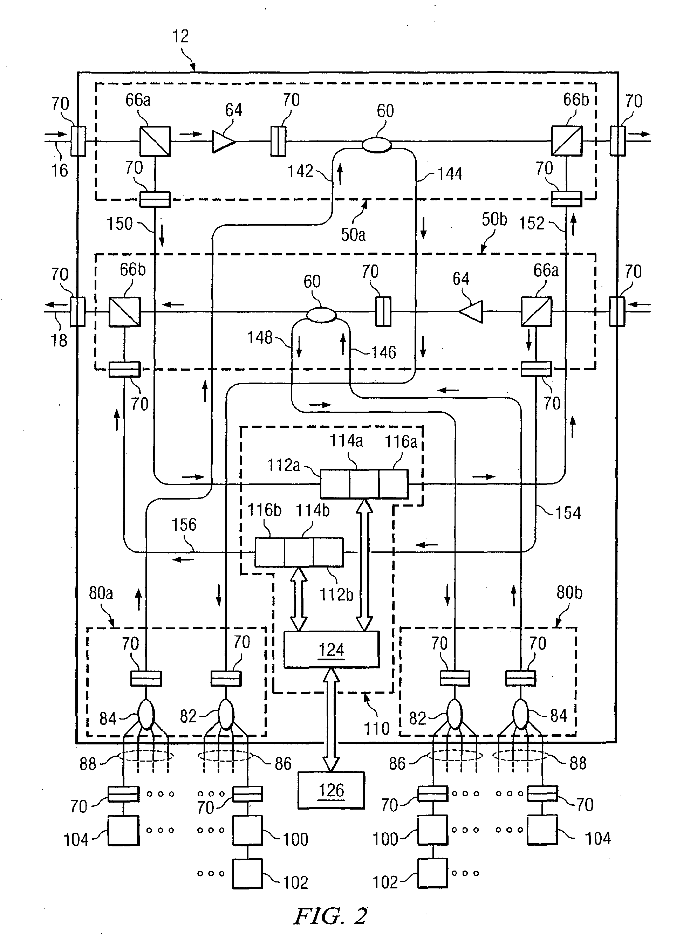

FIGURE 2 is a block diagram illustrating details of an ADN 12 in accordance with one embodiment of the present invention. Referring to FIGURE 2, the ADN 12 comprises counterclockwise transport element 50a, clockwise transport element 50b, counterclockwise distributing/combining element 80a, clockwise distributing/combining element 80b, and managing element 110. In one embodiment, the elements 50, 80, and 110, as well as components within the elements may be interconnected with optical fiber links. In other embodiments, the components may be implemented in part or otherwise with planar waveguide circuits and/or free space optics. Any other suitable connections may alternatively be used. In addition, the elements of ADN 12 may each be implemented as one or more discrete cards within a card shelf of the ADN 12. In addition, functionality of an element itself may be distributed across a plurality of discrete cards. In this way, ADN 12 is modular, upgradeable, and provides a pay-as-you-grow architecture. Exemplary connectors 70 for a card shelf embodiment are illustrated by FIGURE 2. The connectors 70 may allow efficient and cost effective replacement of failed components. It will be understood that additional, different and/or other connectors may be provided as part of an ADN 12.

Transport elements 50 are positioned "in-line" on rings 16 and 18. As described above, ADNs 12 are passive nodes since they do not include in-line active add/drop components, such as optical switches, that terminate particular wavelengths of the optical traffic. Transport elements 50 may comprise either a single add/drop coupler 60 or a plurality of add/drop couplers 60 which allow for the passive adding and dropping of traffic. In the illustrated embodiment, transport elements 50 each include a single add/drop coupler 60. Alternatively, a separate drop coupler and add coupler may be used so that if one of the couplers fail, the other coupler can still add or drop. Although the dual coupler arrangement increases the total number of couplers in transport elements 50, the two-coupler arrangement may reduce channel interference by dropping local traffic from ring 16 or 18 before adding traffic to ring 16 or 18.

In one embodiment, optical coupler 60 is a fiber coupler with two inputs and two outputs. Such an embodiment is described with reference to FIGURE 3. Optical coupler 60 may, in certain embodiments, be combined in whole or part with a wave guide circuit and/or free space optics. It will be understood that coupler 60 may include one or any number of any suitable inputs and outputs and that the coupler 60 may comprise a greater number of inputs than outputs or a greater number of outputs than inputs. Although couplers 60 are described, any other suitable optical splitters may be used. For the purposes of this description and the following claims, the terms "coupler," "splitter," and "combiner" should each be understood to include any device which receives one or more input optical signals, and either splits or combines the input optical signal(s) into one or more output optical signals.

Transport elements 50 further comprise OSC filters 66 at the ingress and egress edges of each element, and an amplifier 64 between the ingress OSC filter 66a and the egress OSC filter 66b. Amplifiers 64 may comprise an erbium-doped fiber amplifier (EDFA) or other suitable amplifier. OSC filters 66 may comprise thin film type, fiber grating or other suitable type filters.

Distributing/combining elements 80 may each comprise a drop signal splitter 82 and an add signal combiner 84. Splitters 82 may comprise a coupler with one optical fiber ingress lead and a plurality of optical fiber egress leads which serve as drop leads 86. The drop leads 86 may be connected to one or more filters 100 which in turn may be connected to one or more drop optical receivers 102. In particular embodiments in which four drop leads 86 are implemented, splitters 82 may each comprise a 2x4 optical coupler, where one ingress lead is terminated, the other ingress lead is coupled to a coupler 60 via a fiber segment, and the four egress leads are used as the drop leads 86. Although the illustrated embodiment shows four drop leads 86, it should be understood that any appropriate number of drop leads 86 may implemented, as described in further detail below.

Combiners 84 similarly may comprise a coupler with multiple optical fiber ingress leads, which serve as add leads 88, and one optical fiber egress lead. The add leads 88 may be connected to one or more add optical transmitters 104. In particular embodiments in which four add leads 88 are implemented, combiners 84 may each comprise a 4x2 optical coupler, where one egress lead is terminated, the other egress lead is coupled to a coupler via a fiber segment, and the four ingress leads are used as the add leads 88. Although the illustrated embodiment shows four add leads 88, it should be understood that any appropriate number of add leads 88 may implemented, as described in further detail below. ADN 12 further comprises counterclockwise add fiber segment 142, counterclockwise drop fiber segment 144, clockwise add fiber segment 146, clockwise drop fiber segment 148, which connect the couplers 60 to splitters 82 and combiners 84.

Managing element 110 may comprise OSC receivers 112, OSC interfaces 114, OSC transmitters 116, and an element management system (EMS) 124. ADN 12 also comprises OSC fiber segments 150, 152, 154, and 156, that connect managing element 110 to ingress and egress OSC filters 66. Each OSC receiver 112, OSC interface 114, and OSC transmitter 116 set forms an OSC unit for one of the rings 16 or 18 in the ADN 12. The OSC units receive and transmit OSC signals for the EMS 124. The EMS 124 may be communicably coupled to a network management system (NMS) 126. NMS 126 may reside within ADN 12, in a different node, or external to all of the ADNs 12.

EMS 124 and/or NMS 126 may comprise logic encoded in media for performing network and/or node monitoring, failure detection, protection switching and loop back or localized testing functionality of the network 10. Logic may comprise software encoded in a disk or other computer-readable medium and/or instructions encoded in an application-specific integrated circuit (ASIC), field programmable gate array (FPGA), or other processor or hardware. It will be understood that functionality of EMS 124 and/or NMS 126 may be performed by other components of the network and/or be otherwise distributed or centralized. For example, operation of NMS 126 may be distributed to the EMS 124 of nodes 12 and/or 14, and NMS 126 may thus be omitted as a separate, discrete element. Similarly, the OSC units may communicate directly with NMS 126 and EMS 124 omitted.

In operation, transport elements 50 are operable to passively add traffic to rings 16 and 18 and to passively drop traffic from rings 16 and 18. The transport elements 50 are further operable to passively add and drop the OSC signal to and from rings 16 and 18. More specifically, each OSC ingress filter 66a processes an ingress optical signal from its respective ring 16 or 18. OSC filters 66a filters the OSC signal from the optical signal and forwards the OSC signal to its respective OSC receiver 112. Each OSC filter 66a also forwards or lets pass the remaining transport optical signal to the associated amplifier 64. Amplifier 64 amplifies the signal and forwards the signal to its associated coupler 60.

Each coupler 60 passively splits the signal from the amplifier 64 into two generally identical signals: a through signal that is forwarded to egress OSC filter 66b (after being combined with add traffic, as described below), and a drop signal that is forwarded to the associated distributing/combining element 80. The split signals are copies in that they are identical or substantially identical in content, although power and/or energy levels may differ. Each coupler 60 passively combines the through signal with an add signal comprising add traffic from the associated distributing/combining element 80. The combined signal is forwarded from the coupler 60 to its associated OSC egress filter 66b. Couplers 60 work for both adding and dropping, so they are very low-loss and simple. If a failure occurs in a coupler 60, the replacement of the coupler affects both adding and dropping. To avoid this, a drop coupler and an add coupler can be cascaded instead of using a single coupler 60. This configuration of such an embodiment would be similar to the configuration of the gateway 14 illustrated in FIGURE 4, except with the removal of mux/demux units 214 from transport elements 200a and 200b (the output of coupler 60a would be connected to the input of coupler 60b).

Each OSC egress filter 66b adds an OSC signal from the associated OSC transmitter 116 to the combined optical signal and forwards the new combined signal as an egress transport signal to the associated ring 16 or 18 of network 10. The added OSC signal may be locally generated data or may be received OSC data forwarded through by the EMS 124.

Prior to being forwarded to couplers 60, locally-derived add traffic (from local clients or subscribers, from another network, or from any other appropriate source) is received at a distributing/combining element 80 from one or more of the optical transmitters 104. One or more of the optical transmitters 104 may include one or more components for adjusting the optical output power from the transmitter 104, such as a manual variable optical attenuator. Optical transmitters 104 may include a laser tunable to one of amongst a set of wavelengths. In this embodiment, a light path may be established between two ADNs 12 by setting a laser of one of the optical transmitters 104 in the transmitting ADN to a specified frequency and correspondingly setting to the specified frequency a filter of an optical receiver in the receiving ADN. The traffic channel may be passively combined with and separated from other traffic and is passively added to and dropped from rings 16 and 18. It will be understood that optical transmitters 104 with fixed lasers and optical receivers with fixed filters may be used in connection with the present invention.

Traffic to be added to ring 18 is received at distributing/combining element 80a and traffic to be added to ring 16 is received at distributing/combining element 80b. These received signals are able to be used as monitors. A separate optical transmitter 104 may be used for each wavelength/channel in which traffic is to be added at an ADN 12. Furthermore, each add lead 88 may be associated with a different wavelength/channel. Therefore, there may be an transmitter 104 and add lead 88 combination for each separate channel in which traffic is desired to be added at a particular ADN 12. Although four add leads 88 for each ring 16 and 18 are illustrated (although four transmitters 104 are not explicitly illustrated), it will be understood that any appropriate number of optical transmitters 104 and associated add leads 88 may be used.

Add traffic from one or more transmitters 104 associated with a particular distributing/combining element 80 is received at the associated combiner 84. The combiner 84 combines the signals from multiple transmitters 104 (if applicable) and forwards the combined add signal to the associated coupler 60 for addition to the associated ring 16 or 18. As described above, this add traffic is then combined with forwarded traffic at coupler 60. Combiner 84 may be a coupler, a multiplexer, or any other suitable device.

In the illustrated embodiment, separate optical transmitters 104 are described as being associated with each distributing/combining element 80. In such an embodiment, different signals may be communicated over each ring 16 and 18. For example, a first signal can be added in a particular channel/wavelength on ring 16 at an ADN 12, and an entirely different signal can be added in the same channel/wavelength on ring 18 by the same ADN 12. This is possible since each channel/wavelength has an associated optical transmitter 104 at each distributing/combining element 80. As described below, such a feature is useful when providing an OSPPR network, among other reasons.

However, as described in further detail below, when providing an OUPSR network, the same traffic is typically added from an ADN 12 on both ring 16 and ring 18. This duplicate traffic is used to provide fault protection. In such embodiments, two different sets of optical transmitters 104 are not required. Instead, distributing/combining elements 80a and 80b can share a single set of transmitters 104. In such a case, the add signals generated by a particular optical transmitter 104 (add signals in a particular channel/wavelength) may be communicated to the combiner 84 of both distributing/combining element 80a and distributing/combining element 80b. Thus, the same traffic is added to rings 16 and 18 by the ADN 12. Alternatively, as illustrated in FIGURE 2, two separate transmitters 104 may be used to increase the reliability of ADN 12 - one to add traffic to ring 16 and one to add traffic to ring 18. In such a case, traffic from a local client would be simultaneously input to both of the transmitters 104.

As described above, locally-destined traffic on a ring 16 or 18 is dropped to the associated distributing/combining element 80 using coupler 60. The drop traffic is received at the splitter 82 of the distributing/combining element 80, and the splitter 82 splits the dropped signal into multiple generally identical signals and forwards each signal to an optical receiver 102 via a drop lead 86. In particular embodiments, the signal received by optical receivers 102 may first be filtered by an associated filter 100. Filters 100 may be implemented such that each filter allows a different channel to be forwarded to its associated receiver 102. Filters 100 may be tunable filters (such as an acousto-optic tunable filter) or other suitable filters, and receivers 102 may be broadband receivers or other suitable receivers. Such a configuration allows each receiver 102 associated with a particular ring 16 or 18 to receive a different wavelength, and to forward the information transmitted in that wavelength to appropriate clients. A dropped optical signal passing through a filter 100 is able to be optically forwarded to a client without signal regeneration if the signal does not require such regeneration.

As mentioned above, ADN 12 also provides an element management system. EMS 124 monitors and/or controls all elements in the ADN 12. In particular, EMS 124 receives an OSC signal from each ring 16 and 18 in an electrical format via an OSC receiver 112 associated with that ring (the OSC receiver 112 obtains the signal via an OSC filter 66a). EMS 124 may process the signal, forward the signal and/or loop-back the signal. Thus, for example, EMS 124 is operable to receive the electrical signal and resend the OSC signal via OSC transmitter 116 and OSC filter 66b to the next node on the ring 16 or 18, adding, if appropriate, node-specific error information or other suitable information to the OSC.

In one embodiment, each element in an ADN 12 monitors itself and generates an alarm signal to EMS 124 when a failure or other problem occurs. For example, EMS 124 in ADN 12 may receive one or more of various kinds of alarms from the elements and components in ADN 12: an amplifier loss-of-light (LOL) alarm, an amplifier equipment alarm, an optical receiver equipment alarm, optical transmitter equipment alarm, or other alarms. Some failures may produce multiple alarms. For example, a fiber cut may produce amplifier LOL alarms at adjacent nodes and also error alarms from the optical receivers. In addition, EMS 124 may monitor the wavelength and/or power of the optical signal within ADN 12 using an optical spectrum analyzer (OSA) communicably connected to appropriate fiber segments within ADN 12 and to EMS 124.

The NMS 126 collects error information from all of the nodes 12 and 14 and is operable to analyze the alarms and determine the type and/or location of a failure. Based on the failure type and/or location, NMS 126 determines needed protection switching actions for the network 10. The protection switch actions may be carried out by NMS 126 by issuing instructions to EMS 124 in nodes 12 and 14.

Error messages may indicate equipment failures that may be rectified by replacing the failed equipment. For example, a failure of an optical receiver or transmitter may trigger an optical receiver equipment alarm or an optical transmitter equipment alarm, respectively, and the optical receiver or transmitter replaced as necessary.

FIGURE 3 is a block diagram illustrating details of an optical coupler 60 of ADN 12 of FIGURE 2, in accordance with one embodiment of the present invention. In this embodiment, the optical coupler 60 is a fiber coupler with two inputs and two outputs. The optical coupler 60 may, in other embodiments, be combined in whole or part with a waveguide circuit and/or free space optics. It will be understood that the coupler 60 may include one or any number of any suitable inputs and outputs, and that the coupler 60 may comprise a greater number of inputs than outputs or a greater number of outputs than inputs.

Referring to FIGURE 3, the optical coupler 60 comprises a main body 180, a first ingress segment 182, second ingress segment 184, first egress segment 186, and second egress segment 188. First ingress segment 182 and first egress segment 186 comprise a first continuous optical fiber. Second ingress segment 184 and second egress segment 188 comprise a second continuous optical fiber. Outside of the main body 180, segments 182, 184, 186, and 188 may comprise a jacket, a cladding, and a core fiber. Inside the main body 180, the jacket and cladding may be removed and the core fibers twisted or otherwise coupled together to allow the transfer of optical signals and/or energy of the signals between and among the first and second continuous optical fibers. In this way, the optical splitter/coupler 60 passively combines optical signals arriving from ingress segments 182 and 184 and passively splits and forwards the combined signal via egress segments 186 and 188. A plurality of signals may be combined and the combined signal split by combining and thereafter splitting the combined signal or by simultaneously combining and splitting the signals by transferring energy between fibers. In this manner, the optical splitter/coupler 60 provides flexible channel-spacing with no restrictions concerning channel-spacing in the main streamline. In a particular embodiment, the coupler has a directivity of over -55 dB. Wavelength dependence on the insertion loss is less than about 0.5 dB over a 100 nm range. The insertion loss for a 50/50 coupler is less than about -3.5 dB.

FIGURE 4 is a block diagram illustrating details of an optical gateway 14 in accordance with one embodiment of the present invention. As previously described, a gateways 14 may be alternately disposed between ADNs 12. A gateway 14 may be any suitable node, nodes or element of one or more nodes that is configurable to selectively pass-through or terminate one or more channels received by the gateway 14 in one or more directions of a ring or other suitable network configuration.

Gateway 14 includes a counterclockwise transport element 200a and a clockwise transport element 200b. Transport elements 200 each comprise a multiplexer/demultiplexer (mux/demux) unit 214. Mux/demux units 214 may each comprise a demultiplexer 206, a multiplexer 204, and switch elements which may comprise an array of switches 210 or other components operable to selectively forward or terminate a traffic channel (or group of channels). In a particular embodiment, multiplexers 204 and demultiplexers 206 may comprise arrayed waveguides. In another embodiment, the multiplexers 204 and the demultiplexers 206 may comprise fiber Bragg gratings, thin-film-based sub-band (a group of wavelengths/channels which are a sub-set of the total wavelengths/channels available) multiplexers/demultiplexers, or any other suitable devices. If a mux/demux unit 214 consists of sub-band mux/demux, the unit 214 is operable to block or forward subbands. The switches 210 may comprise 1x2 or other suitable switches, optical cross-connects, or other suitable components operable to selectively pass-through or terminate the demultiplexed traffic channels. Although not illustrated, mux/demux units 214 may also include a variable optical attenuator positioned between each switch 210 and the multiplexer 204 of the mux/demux unit 214. Mux/demux units 214 may alternatively or additionally comprise any other components that are collectively operable to selectively terminate or pass individual channels or groups of channels.

Similarly to ADNs 12, gateway transport elements 200 also include couplers 60, amplifiers 64, OSC filters 66, and connectors 70. In the illustrated embodiment, a coupler 60a is positioned prior to each mux/demux unit 214 and a coupler 60b is positioned after each mux/demux unit 214. Coupler 60a passively splits the signal from a pre-amplifier 64a into two generally identical signals: an through signal that is forwarded to mux/demux unit 214, and a drop signal that is forwarded to a distributing/combining element 80, as described in conjunction with FIGURE 2. The split signals may be substantially identical in content, although power levels may differ. Coupler 60b passively combines a signal from mux/demux unit 214 with a signal from the respective distributing/combining element 80. The combined signal is forwarded from the coupler 60b to a post-amplifier 64b.

The transport elements 200 are further operable to passively add and drop an OSC signal to and from rings 16 and 18, as with transport elements 50 of ADNs 12. More specifically, each transport element 200 includes an OSC ingress filter 66a that processes an ingress optical signal from its respective ring 16 or 18. Each OSC filter 66a filters the OSC signal from the optical signal and forward the OSC signal to a respective OSC receiver 112. Each OSC filter 66a also forwards or lets pass the remaining transport optical signal to the associated pre-amplifier 64a. Pre-amplifier 64a amplifies the signal and forwards the signal to its associated coupler 60a.

Transport elements 200 also each include an OSC egress filter 66b that adds an OSC signal from an associated OSC transmitter 116 to the optical signal from post-amp 64b and forwards the combined signal as an egress transport signal to the associated ring 16 or 18 of network 10. The added OSC signal may be locally generated data or may be received OSC data passed through by the local EMS 124.

Similar to the distributing/combining elements 80 of the ADN 12 illustrated in FIGURE 2, distributing/combining elements 80 of gateway 14 may each comprise a drop signal splitter 82 and an add signal combiner 84. Splitters 82 may comprise a coupler with one optical fiber ingress lead and a plurality of optical fiber egress leads which serve as drop leads 86. The drop leads 86 may be connected to one or more filters 100 which in turn may be connected to one or more drop optical receivers 102. In particular embodiments in which four drop leads 86 are implemented, splitters 82 may each comprise a 2x4 optical coupler, where one ingress lead is terminated, the other ingress lead is coupled to a coupler 60 via a fiber segment, and the four egress leads are used as the drop leads 86. Although the illustrated embodiment shows four drop leads 86, it should be understood that any appropriate number of drop leads 86 may implemented, as described in further detail below.

Combiners 84 similarly may comprise a coupler with multiple optical fiber ingress leads, which serve as add leads 88, and one optical fiber egress lead. The add leads 88 may be connected to one or more add optical transmitters 104. In particular embodiments in which four add leads 88 are implemented, combiners 84 may each comprise a 4x2 optical coupler, where one egress lead is terminated, the other egress lead is coupled to a coupler via a fiber segment, and the four ingress leads are used as the add leads 88. Although the illustrated embodiment shows four add leads 88, it should be understood that any appropriate number of add leads 88 may implemented, as described in further detail below. Gateway 14 further comprises counterclockwise add fiber segment 242, counterclockwise drop fiber segment 244, clockwise add fiber segment 246, clockwise drop fiber segment 248, which connect the couplers 60 to splitters 82 and combiners 84.

Also similar to ADNs 12, gateway 14 comprises a management element 110 comprising OSC receivers 112, OSC interfaces 114, OSC transmitters 116, and an EMS 124 (which is coupled to NMS 126), as described above with reference to FIGURE 2. The EMS 110 is connected to transport elements 200 via OSC fiber segments 150, 152, 154, and 156, again as described in reference to FIGURE 2.

In operation, each transport element 200 receives an optical signal, comprising a plurality of channels, from its respective ring 16 or 18. OSC filter 66a filters the OSC signal from the optical signal as described above and the remaining optical signal is forwarded to amplifier 64a, which amplifies the signal and forwards it to coupler 60a. Coupler 60a passively splits the signal from the amplifier 64 into two generally identical signals: a pass-through signal that is forwarded to mux/demux unit 214, and a drop signal that is forwarded to the associated distributing/combining element 80. The split signals may be substantially identical in content, although power levels may differ.

The drop traffic is received at the splitter 82 of the distributing/combining element 80, and the splitter 82 splits the dropped signal into multiple generally identical signals and forwards each signal to an optical receiver 102 via a drop lead 86. In particular embodiments, the signal received by optical receivers 102 may first be filtered by an associated filter 100. Filters 100 may be implemented such that each filter allows a different channel to be forwarded to its associated receiver 102. Filters 100 may be tunable filters (such as an acousto-optic tunable filter) or other suitable filters, and receivers 102 may be broadband receivers or other suitable receivers. Such a configuration allows each receiver 102 associated with a particular ring 16 or 18 to receive a different wavelength, and to forward the information transmitted in that wavelength to appropriate clients. A dropped optical signal passing through a filter 100 is able to be optically forwarded to a client without signal regeneration if the signal does not require such regeneration.

The forwarded optical signal from coupler 60a is received at demultiplexer 206 of mux/demux unit 214 and is demultiplexed the signal into its constituent channels. Switches 210 selectively terminate or forward each channel to multiplexer 204. As described below, channels may be selectively terminated or forwarded to implement particular protection schemes (and also to implement subnets). The channels that are forwarded by switches 210 are received by multiplexer 204, which multiplexes the received channels into a WDM optical signal and forwards the optical signal to coupler 60b. Furthermore, certain embodiments may include variable optical attenuators between switches 210 and multiplexer 204 (or between demultiplexer 206 and switches 210) to adjust the level of each channel.

Locally-derived traffic (from local clients or subscribers, from another network, or from any other appropriate source) to be added to network 10 is received at a distributing/combining element 80 from one or more of the optical transmitters 104, as described with reference to FIGURE 2. Traffic to be added to ring 18 is received at distributing/combining element 80a and traffic to be added to ring 16 is received at distributing/combining element 80b. Add traffic from one or more transmitters 104 associated with a particular distributing/combining element 80 is received at the associated combiner 84. As described above with reference to FIGURE 2, separate optical transmitters 104 may be associated with each distributing/combining element 80a and 80b or, alternatively, distributing/combining elements 80a and 80b can share a set of transmitters 104.

Combiner 84 combines the signals from multiple transmitters 104 (if applicable) and forwards the combined add signal to the associated coupler 60b for addition to the associated ring 16 or 18. Couplers 60b passively combine the optical signal from the associated mux/demux unit 214 with the optical signal from the associated distributing/combining element 80. The combined signal is forwarded from the coupler 60b to the associated post-amplifier 64b, where the combined optical signal is amplified. The amplified optical signal is then forwarded to OSC egress filter 66b, which adds an OSC signal from the associated OSC transmitter 116 to the combined optical signal and forwards the new combined signal as an egress transport signal to the associated ring 16 or 18 of network 10. The added OSC signal may be locally generated data or may be received OSC data forwarded through by the EMS 124.

FIGURE 5 is a block diagram illustrating details of an optical gateway 114 in accordance with another embodiment of the present invention. Gateway 114 is similar to gateway 14 except that it does not include couplers 60 and distributing/combining elements 80a and 80b. Therefore, gateway 114 has the ability to add traffic from and drop traffic to local clients, but does so using 2x2 switches 210 instead of using couplers 60.

Gateway 114 does include a mux/demux unit 214 as described in conjunction with FIGURE 4. Mux/demux unit 214 receives an optical signal after it passes through OSC filter 66a and amplifier 64a. Demultiplexer 206 of mux/demux unit 214 demultiplexes the received signal into its constituent channels. Switches 210 are 2x2 switches (instead of the 1x2 switches of gateway 14) that can either be switched to an "open" position in which traffic in the associated channel is forwarded to multiplexer 204 or that can be switched to a "crossed" position in which traffic in the associated channel is dropped to an associated receiver 102 (or dropped to a terminated port with no receiver 102, if appropriate) and in which add traffic received from an associated transmitter 104 may be added and forwarded to multiplexer 204. Each 2x2 switch 210 may have an associated receiver 102 and transmitter 104, although the receiver 102 and transmitter 104 associated with only a single switch of each transport element 200 are illustrated in FIGURE 5. A tunable filter 100 may not be needed in association with each receiver 102 since each switch 210 drops a different channel or subset of channels to its associated receiver 102 (as compared to couplers 60, which drop the entire optical signal). A channel received at a switch 210 can be terminated by switching the switch 210 to the "crossed" position so that the traffic is not forwarded to the multiplexer 204 (and by not adding any new add traffic at the switch 210).

As described below, channels may be selectively terminated or forwarded to implement particular protection schemes (and also to implement subnets). The channels that are forwarded by switches 210 are received by multiplexer 204, which multiplexes the received channels into a WDM optical signal and forwards the optical signal to amplifier 64b, where it is amplified. The amplified optical signal is then forwarded to OSC egress filter 66b, which adds an OSC signal from the associated OSC transmitter 116 to the optical signal and forwards the new signal as an egress transport signal on the associated ring 16 or 18 of network 10. The added OSC signal may be locally generated data or may be received OSC data forwarded through by EMS 124.

FIGURE 6 is a block diagram illustrating example light paths from an add/drop node 12a in an example optical network for providing OUPSR protection in accordance with one embodiment of the present invention. For ease of reference, only high-level details of ADNs 12 and gateways 14 are shown. The reference numbers used below to reference the various components of ADNs 12 and gateways 14 are with reference to FIGURES 2, 4, and/or 5.

In the illustrated embodiment, two traffic streams are shown. Traffic stream 300 is a clockwise stream originating from ADN 12a and traveling on ring 16 destined for both ADN 12b and gateway 14a. Traffic stream 302 is a counterclockwise stream originating from ADN 12a and traveling on ring 18 destined for both ADN 12b and gateway 14a. Although, traffic streams 300 and 302 each have two destinations, in other embodiments traffic streams 300 and 302 may each have one or more than two destinations. Traffic streams 300 and 302 are illustrated as having two destinations in the illustrated embodiment to show that both traffic from an ADN 12 to another ADN 12 and traffic from an ADN 12 to a gateway 14 can be protected using OUPSR protection. For such OUPSR protection, traffic streams 300 and 302 include identical content. As described below, these dual OUPSR traffic streams may be implemented by configuring gateways 14 to provide an appropriate termination point for streams 300 and/or 302 so as to prevent interference in the network.

Traffic stream 300 is originated in a first wavelength/channel, λ₁, at ADN 12a using a transmitter 104 associated with ring 16. Stream 300 is added to existing optical signals on ring 16 via the coupler 60 of ADN 12a that is associated with ring 16. Although only stream 300 is shown on ring 16, it should be understood that other traffic streams in other channels (or possibly in the same channel in other subnets) are also traveling around ring 16.

After exiting ADN 12a, stream 300 travels via ring 16 to gateway 14b. Coupler 60a of gateway 14b both drops (in other words, forwards a copy to distributing/combining element 80) and forwards traffic on ring 16 coming from ADN 12a (including stream 300). The forwarded traffic is demultiplexed by demultiplexer 206 of gateway 14b into its constituent channels, including stream 300 in λ₁. Demultiplexed stream 300 is forwarded from the demultiplexer 206 to its associated switch 210. The switch 210 is configured in the illustrated embodiment to pass through stream 300 since stream 300 has not reached its final destination. The dropped stream 300 included in the traffic dropped from coupler 60a is terminated by configuring the filters 100 to not pass through λ₁ to an associated receiver 102.

After exiting gateway 14b, stream 300 travels via ring 16 to ADN 12b. The coupler 60 of ADN 12b drops stream 300, along with all other traffic on ring 16. Since stream 300 is destined for ADN 12b, a filter 100 of ADN 12b is configured to pass through stream 300. A receiver 102 associated with the filter 100 may then be used to receive stream 300 and forward the information in that stream to one or more clients of ADN 12b. Coupler 60 of ADN 12b also forwards stream 300 on ring 16, and this forwarded stream 300 travels around ring 16 to gateway 14c. Gateway 14c handles stream 300 in the same manner as gateway 14b. In other words, gateway 14c does not pass stream 300 to any local clients, but gateway 14c does pass stream 300 through its mux/demux unit 214.

After exiting gateway 14c, stream 300 travels via ring 16 to ADN 12c. The coupler 60 of ADN 12c drops stream 300, along with all other traffic on ring 16. Since stream 300 is not destined for ADN 12c, none of the filters 100 of ADN 12c are configured to pass through stream 300. The coupler 60 of ADN 12c also forwards stream 300 on ring 16, and this forwarded stream 300 travels around ring 16 to gateway 14d. Gateway 14d handles stream 300 in the same manner as gateways 14b and 14c. After exiting gateway 14d, stream 300 is received at ADN 12d, which handles stream 300 in the same manner as ADN 12c.

After exiting ADN 12d, stream travels via ring 16 to gateway 14a. Coupler 60a of gateway 14b both drops and forwards traffic on ring 16 coming from ADN 12d (including stream 300). Since gateway 14a is a destination for stream 300, the dropped stream 300 included in the traffic dropped from coupler 60a is passed through to one or more clients of gateway 14a by configuring a filter 100 of gateway 14a to pass through λ₁ to an associated receiver 102. The forwarded traffic is demultiplexed by demultiplexer 206 of gateway 14a into its constituent channels, including stream 300 in λ₁. Demultiplexed stream 300 is forwarded from the demultiplexer 206 to its associated switch 210. The switch 210 is configured in the illustrated embodiment to terminate stream 300 since stream 300 has reached its final destination. This termination of stream 300 prevents it from reaching ADN 12a and thus interfering with new traffic in stream 300 being added to ring 16 at ADN 12a.

Traffic stream 302 is originated in a second wavelength/channel, λ₂, at ADN 12c using a transmitter 104 associated with ring 18. The use of λ₂ is used as merely an example and for purposes of distinction. In fact, since ring 16 is separate from ring 18, stream 302 may be (and might typically be) transmitted in λ₁. Furthermore, any other appropriate channels may be used to transmit streams 300 and 302.

Stream 302 is added to existing optical signals on ring 18 via the coupler 60 of ADN 12a that is associated with ring 18. Although only stream 302 is shown on ring 18, it should be understood that other traffic streams in other channels (or possibly in the same channel in other subnets) are also traveling around ring 18.

After exiting ADN 12a, stream 302 travels via ring 18 to gateway 14a. Coupler 60a of gateway 14a both drops and forwards traffic on ring 18 coming from ADN 12a (including stream 302). Since gateway 14a is a destination for stream 302, the dropped stream 302 included in the traffic dropped from coupler 60a is passed through to one or more clients of gateway 14a by configuring a filter 100 of gateway 14a to pass through λ₂ to an associated receiver 102. The forwarded traffic is demultiplexed by demultiplexer 206 of gateway 14a into its constituent channels, including stream 302 in λ₂. Demultiplexed stream 302 is forwarded from the demultiplexer 206 to its associated switch 210. The switch 210 is configured in the illustrated embodiment to pass through stream 302 since stream 302 has not reached its final destination. However, in the case where gateway 14a is the only destination of stream 302 and if λ₂ is to be reused on ring 18, then the associated switch 210 of gateway 14a can be configured to terminate stream 302.

After exiting gateway 14a, stream 302 travels via ring 18 to ADN 12d. The coupler 60 of ADN 12d drops stream 302, along with all other traffic on ring 18. Since stream 302 is not destined for ADN 12d, none of the filters 100 of ADN 12d are configured to pass through stream 302. The coupler 60 of ADN 12d also forwards stream 302 on ring 18, and this forwarded stream 302 travels around ring 18 to gateway 14d.

Coupler 60a of gateway 14d both drops and forwards traffic on ring 18 coming from ADN 12d (including stream 302). The forwarded traffic is demultiplexed by demultiplexer 206 of gateway 14d into its constituent wavelengths/channels, including stream 302 in λ₂. Demultiplexed stream 302 is forwarded from the demultiplexer 206 to its associated switch 210. The switch 210 is configured in the illustrated embodiment to pass through stream 302 (since stream 302 has not reached its final destination). The dropped stream 302 included in the traffic dropped from coupler 60a is terminated by configuring the filters 100 to not pass through λ₂ to an associated receiver 102 (it does not pass to any local clients of gateway 14d).

After exiting gateway 14d, stream 302 is received at ADN 12c, which handles stream 302 in the same manner as ADN 12d. Stream 302 then travels around ring 18 to gateway 14c, which handles stream 302 in the same manner as gateway 14d. In other words, gateway 14c does not pass stream 302 to any local clients, but gateway 14c does pass stream 302 through its mux/demux unit 214.

After exiting gateway 14c, stream 302 travels via ring 18 to ADN 12b. The coupler 60 of ADN 12b drops stream 302, along with all other traffic on ring 18. Since stream 302 is destined for ADN 12b, a filter 100 of ADN 12b is configured to pass through stream 302. A receiver 102 (associated with the filter 100) may then be used to receive stream 302 and forward the information in that stream to an appropriate location. The coupler 60 of ADN 12b also forwards stream 302 on ring 18, and this forwarded stream 302 travels around ring 18 to gateway 14b.

Coupler 60a of gateway 14b both drops and forwards traffic on ring 18 coming from ADN 12b (including stream 302). The dropped stream 302 included in the traffic dropped from coupler 60a is terminated by configuring the filters 100 to not pass through λ₂ to an associated receiver 102 (it does not pass to any local clients of gateway 14b). The forwarded traffic is demultiplexed by demultiplexer 206 of gateway 14b into its constituent channels, including stream 302 in λ₂. Demultiplexed stream 302 is forwarded from the demultiplexer 206 to its associated switch 210. The switch 210 is configured in the illustrated embodiment to terminate stream 302 (since stream 302 has reached its final destination). This termination of stream 302 prevents it from reaching ADN 12a and thus interfering with stream 302 being added to ring 18 at ADN 12a.

In this manner, OUPSR protection can be provided in the illustrated network through proper configuration of gateways 14. This protection is implemented by providing traffic stream 300 that travels clockwise around ring 16 from its origin to its destinations and traffic stream 302 that includes the same information as traffic stream 300 and that travels counterclockwise around ring 18 from its origin to its destinations. Therefore, protection is provided since the information can reach the destinations even if there is a break or other error in rings 16 and/or 18. For example, if rings 16 and 18 are broken between ADN 12a and gateway 14b, traffic stream 300 will not reach ADN 12b or gateway 14a. However, traffic stream 302 will reach both ADN 12b or gateway 14a - thus providing traffic protection. It will be understood that a fiber cut or other error in other locations of the network may be dealt with in a similar fashion such that traffic can reach each node on the network either via ring 16 or ring 18.

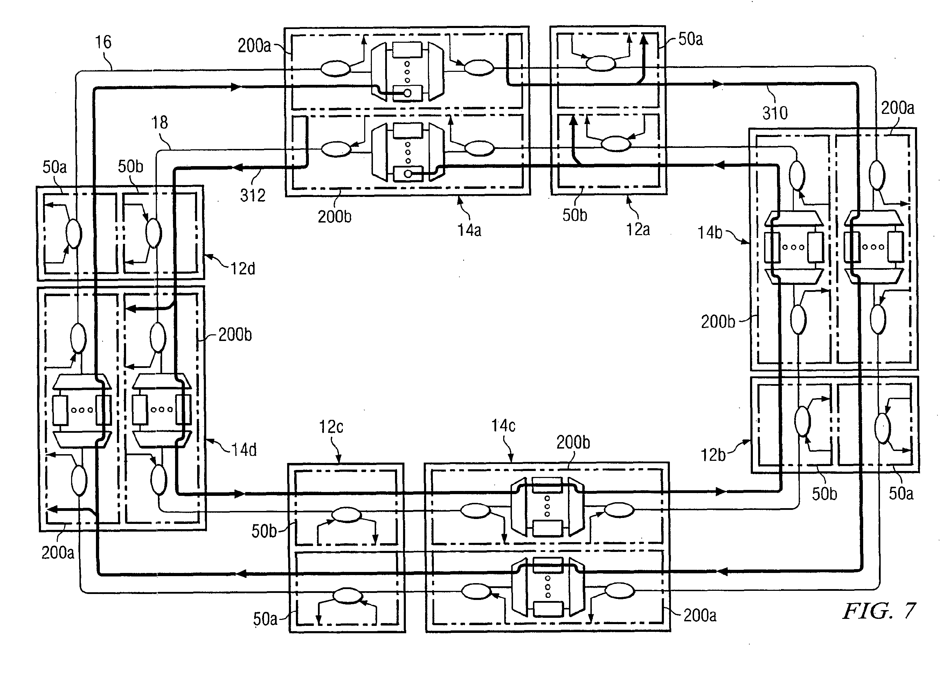

FIGURE 7 is a block diagram illustrating example light paths from an optical gateway 14a in an example optical network for providing OUPSR protection in accordance with one embodiment of the present invention. For ease of reference, only high-level details of ADNs 12 and gateways 14 are shown. The reference numbers used below to reference the various components of ADNs 12 and gateways 14 are with reference to FIGURES 2, 4, and/or 5.

In the illustrated embodiment, two traffic streams are shown. Traffic stream 310 is a clockwise stream originating from gateway 14a and traveling on ring 16 destined for ADN 12a and gateway 14d. Traffic stream 312 is a counterclockwise stream originating from gateway 14a and traveling on ring 18 destined for ADN 12a and gateway 14d. Although traffic streams 310 and 312 each have two destinations, in other embodiments traffic streams 310 and 312 may each have one or more than two destination. Traffic streams 310 and 312 are illustrated as having two destinations in the illustrated embodiment to show that both traffic from a gateway 14 to an ADN 12 and traffic from a gateway 14 to another gateway 14 can be protected using OUPSR protection. For such OUPSR protection, traffic streams 310 and 312 include identical content.

As with streams 300 and 302 of FIGURE 6, these dual OUPSR traffic streams may be implemented by configuring gateways 14 to provide an appropriate termination point for streams 310 and/or 312 so as to prevent interference in the network. Streams 310 and 312 are handled by ADNs 12 and gateways 14 in a manner similar to that described in FIGURE 6. ADN 12a and gateway 14d, as destinations for streams 310 and 312, are configured as described above to pass through streams 310 and 312 to associated receivers 102 so that these streams may be communicated to clients of ADN 12a and gateway 14d. In addition, gateway 14a is configured to terminate both streams 310 and 312 in its respective mux/demux units 214 associated with rings 16 and 18 to prevent recirculation of streams 310 and 312 around rings 16 and 18 (and thus preventing the interference that would be caused by this recirculation). The other ADNs 12 and gateways 14 of the embodiment illustrated in FIGURE 7 are configured to simply pass through streams 310 and 312 along rings 16 and 18. In this manner, OUPSR protection can be provided in the illustrated network in a similar manner as described in conjunction with FIGURE 6.

FIGURE 8 is a block diagram illustrating example protected and preemptable signals in an example optical network in accordance with one embodiment of the present invention. These example optical signals illustrate an implementation of an OSPPR network. In FIGURE 8, for ease of reference, only high-level details of ADNs 12 and gateways 14 are shown. The reference numbers used below to reference the various components of ADNs 12 and gateways 14 are with reference to FIGURES 2, 4, and/or 5.

In the illustrated embodiment, two different traffic streams 320 and 322 are shown. Stream 320 is a protected traffic stream (otherwise known as working traffic) and stream 322 is a preemtable traffic stream (otherwise known as a protection channel access traffic). Preemtable traffic is traffic which may be terminated to provide a protection path for other traffic. Protected traffic is traffic for which a protection path is provided. In the event of a fiber cut or other interruption causing a protected traffic stream to not reach its destination node(s), one or more preemtable traffic streams may be terminated to allow the protected traffic to be transmitted instead of the preemtable traffic. After the interruption has been repaired, the network may revert to its pre-interruption state. In one embodiment, the protected traffic may comprise higher-priority traffic than the preemtable traffic; however, it will be understood that other divisions of the traffic streams into protected and preemtable portions may be suitable or desirable in other embodiments.

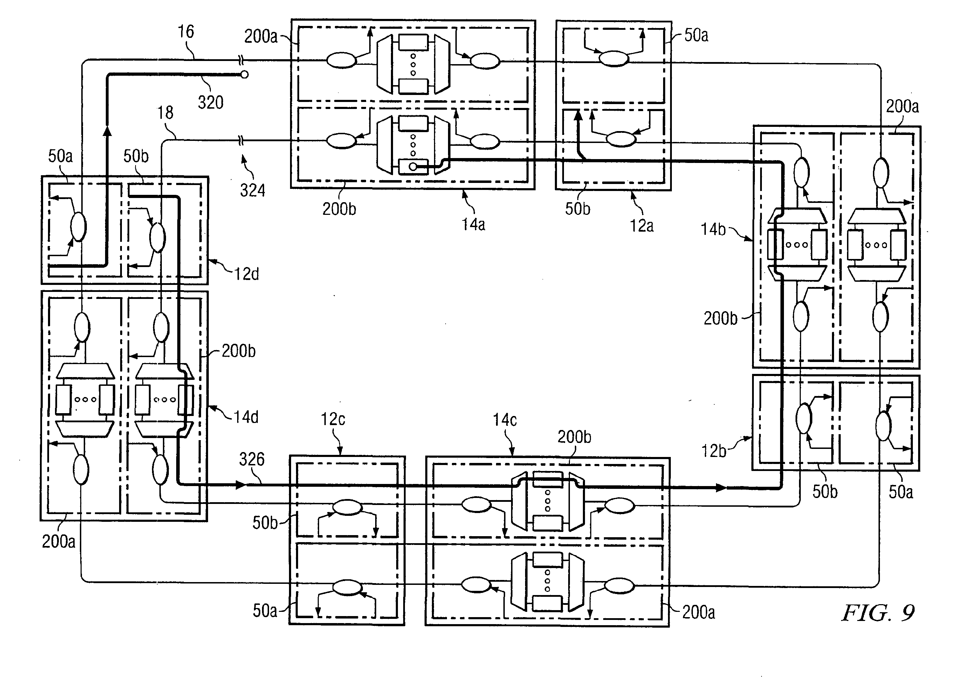

Referring now to FIGURE 8, during normal operations, protected traffic stream 320 travels around clockwise ring 16. It originates from ADN 12d and is destined for ADN 12a. In the illustrated embodiment, protected traffic stream 320 is transmitted in wavelength λ₁. Preemtable traffic stream 322, which travels around counterclockwise ring 18, originates from gateway 14d and is destined for ADN 12c. In the illustrated embodiment, preemtable traffic stream 322 is also transmitted in wavelength λ₁. As is shown in FIGURE 9, traffic stream 322 may be interrupted during protection switching to protect the higher-priority traffic stream 320.

Although a single protected traffic stream 320 and a single preemptable traffic stream 322 are illustrated, it should be understood that multiple protected and/or preemptable traffic streams may be implemented in the same wavelength on the same ring through the use of subnets. In addition, although traffic in a single, example wavelength is illustrated, it will be understood that protected traffic and preemtable traffic may be transmitted in numerous other wavelengths/channels in rings 16 and 18. Furthermore, although protected traffic is illustrated as being transmitted in the same wavelength as preemtable traffic (although on a different ring), numerous other configurations may be implemented. As an example only, protected traffic may be transmitted in odd-numbered channels on ring 16 and in even-numbered channels on ring 18. Alternatively, preemtable traffic may be transmitted in even-numbered channels on ring 16 and in odd-numbered channels on ring 18. Any other suitable configurations may be used.

Protected traffic stream 320 is originated in a first wavelength, λ₁, at ADN 12d using a transmitter 104 associated with ring 16. Stream 320 is added to existing optical signals on ring 16 via the coupler 60 of ADN 12d that is associated with ring 16. After exiting ADN 12d, stream 320 travels via ring 16 to gateway 14a. Coupler 60a of gateway 14a both drops and forwards traffic on ring 16 coming from ADN 12d (including stream 320). The forwarded traffic is demultiplexed by demultiplexer 206 of gateway 14a into its constituent wavelengths/channels, including stream 320 in λ₁. Demultiplexed stream 320 is forwarded from the demultiplexer 206 to its associated switch 210. The switch 210 is configured in the illustrated embodiment to pass through stream 320 (since stream 320 has not reached its final destination). The dropped stream 320 included in the traffic dropped from coupler 60a is terminated by configuring the filters 100 to not pass through λ₁ to an associated receiver 102 (it does not pass to any local clients of gateway 14a).

After exiting gateway 14a, stream 320 travels via ring 16 to ADN 12a. The coupler 60 of ADN 12a associated with ring 16 drops stream 320, along with all other traffic on ring 16. A receiver 102 may be used to receive stream 320 and communicate the information in that stream to an appropriate client of ADN 12a. Stream 320 is also forwarded by coupler 60 of ADN 12a, and travels to gateway 14b.

Coupler 60a of gateway 14b both drops and forwards traffic on ring 16 coming from ADN 12a (including stream 320). The forwarded traffic is demultiplexed by, demultiplexer 206 of gateway 14b into its constituent wavelengths/channels, including stream 320 in λ₁. Demultiplexed stream 320 is forwarded from the demultiplexer 206 to its associated switch 210. The switch 210 is configured in the illustrated embodiment to terminate stream 320. Such termination is appropriate since traffic in stream 320 is destined for ADN 12a, which this traffic stream has already reached. The dropped stream 320 included in the traffic dropped from coupler 60a is similarly terminated by configuring filters 100 of gateway 14b to not pass through λ₁ to an associated receiver 102.

Preemtable traffic stream 322 is originated in the first wavelength, λ₁, at gateway 14d using a transmitter 104 associated with ring 18. Stream 322 is added to existing optical signals on ring 18 via the coupler 60 of gateway 14d that is associated with ring 18. After exiting gateway 14d, stream 322 travels via ring 18 to ADN 12c. The coupler 60 of ADN 12c associated with ring 18 drops stream 322, along with all other traffic on ring 18. A receiver 102 may then be used to receive stream 322 and communicate the information in that stream to one or more clients of ADN 12c. Stream 322 is also forwarded by coupler 60 of ADN 12c, and travels to gateway 14c.

Coupler 60a of gateway 14c both drops and forwards traffic on ring 18 coming from ADN 12c (including stream 322). The forwarded traffic is demultiplexed by demultiplexer 206 of gateway 14c into its constituent wavelengths/channels, including stream 322. Demultiplexed stream 322 is forwarded from the demultiplexer 206 to its associated switch 210, where it is terminated. Such termination is appropriate since the traffic in stream 322 has reached its destination, ADN 12c. The dropped stream 322 included in the traffic dropped from coupler 60a is terminated by configuring filters 100 to not pass through λ₁ to an associated receiver 102.

Therefore, the illustrated network may be used to communicate different information on different rings using the same wavelength. In addition, subnets could also be implemented to communicate different information on the same ring using the same wavelength. Furthermore, since some of this traffic (in the example above, traffic stream 322 on ring 18) is deemed preemtable, OSPPR protection can be implemented in the case of a failure in ring 16 and/or ring 18, as described below.

FIGURE 9 is a block diagram illustrating protection switching and light path protection of traffic stream 320 of FIGURE 8 in accordance with one embodiment of the present invention. In the event of a line cut or other interruption, an alternate light path is created for protected traffic streams that are prevented from reaching their destination node(s) due to the interruption. If the alternate light path would result in interference with preemtable traffic in the same channel, the preemtable traffic is terminated. In the illustrated example, preemtable traffic stream 322 illustrated in FIGURE 8 needs to be terminated to provide an alternative light path over ring 18 (since this traffic stream is carried in λ₁ in the protection path). However, as previously noted, it will be understood that other divisions of traffic may be utilized without departing from the scope of the present invention.

In the illustrated example, a line cut 324 prevents traffic stream 320 from reaching its destination node (ADN 12a) via ring 16. This problem may be detected by one or more nodes or other equipment in network 10 and may be reported to NMS 126. NMS 126 may direct, pursuant to the OSPPR protection switching protocol of this embodiment, the termination of preemtable traffic stream 322 to free the use of λ₁ in ring 18 for protection traffic. After the preemtable traffic stream has been terminated, NMS 126 may direct ADN 12d to begin transmitting the content of stream 320 in a new stream 326 via ring 18.

The new protection stream 326 containing the same content as stream 320 is originated in wavelength λ₁ at ADN 12d using a transmitter 104 associated with ring 18 (in some embodiments, a single transmitter may transmit the same signal over both rings 16 and 18). Stream 326 is added to existing optical signals on ring 18 via the coupler 60 of ADN 12d that is associated with ring 18. After exiting ADN 12d, stream 326 travels via ring 18 to gateway 14d. Coupler 60a of gateway 14d both drops and forwards traffic on ring 18 coming from ADN 12d (including stream 326). The forwarded traffic is demultiplexed by demultiplexer 206 of gateway 14d into its constituent wavelengths/channels, including stream 326 in λ₁. Demultiplexed stream 326 is forwarded from the demultiplexer 206 to its associated switch 210. The switch 210 is configured in the illustrated embodiment to pass through stream 326 since it is has not reached its destination, ADN 12a. The forwarded stream 326 is recombined with other forwarded traffic using multiplexer 204. The dropped stream 326 included in the traffic dropped from coupler 60a is terminated by configuring filters 100 of gateway 14d to not pass through λ₁ to an associated receiver 102.

After exiting gateway 14d, stream 326 travels via ring 18 to ADN 12c. The coupler 60 of ADN 12c drops stream 326, along with all other traffic on ring 18. Since stream 326 is not destined for ADN 12c, none of the filters 100 of ADN 12c are configured to pass through stream 326. The coupler 60 of ADN 12c also forwards stream 326 on ring 18, and this forwarded stream 326 travels around ring 18 to gateway 14c, which handles stream 326 in the same manner as gateway 14d. In other words, gateway 14c does not pass stream 326 to any local clients, but gateway 14c does pass stream 326 through its mux/demux unit 214. After exiting gateway 14c, stream 326 is received at ADN 12b, which handles stream 326 in the same manner as ADN 12c. Stream 326 then travels around ring 18 to gateway 14b, which handles stream 326 in the same manner as gateways 14c and 14d.

After exiting gateway 14b, stream 326 travels via ring 18 to ADN 12a. The coupler 60 of ADN 12a drops stream 326, along with all other traffic on ring 18. Since stream 326 is destined for ADN 12a, a filter 100 of ADN 12a is configured to pass through stream 326. A receiver 102 associated with the filter 100 may then be used to receive stream 326 and forward the information in that stream to one or more clients of ADN 12a. The coupler 60 of ADN 12a also forwards stream 326 on ring 18, and this forwarded stream 326 travels around ring 18 to gateway 14a.

Coupler 60a of gateway 14a both drops and forwards traffic on ring 18 coming from ADN 12a (including stream 326). The dropped stream 326 included in the traffic dropped from coupler 60a is terminated by configuring the filters 100 to not pass through λ₁ to an associated receiver 102. The forwarded traffic is demultiplexed by demultiplexer 206 of gateway 14a into its constituent wavelengths/channels, including stream 326 in λ₁. Demultiplexed stream 326 is forwarded from the demultiplexer 206 to its associated switch 210. The switch 210 is configured in the illustrated embodiment to terminate stream 326 since stream 326 has reached its final destination. This termination of stream 326 prevents it from reaching ADN 12d and thus interfering with the traffic in stream 326 being added to ring 18 at ADN 12d. Although fault 324 in ring 18 would prevent stream 326 from reaching ADN 12d, the termination of stream 326 by gateway 14a prevents interference once fault 324 is repaired (and before the network reverts to its pre-protection switching state).

In this way, an alternate path from ADN 12d to ADN 12a is created without creating interference with other traffic. After repair of fault 324, the network is reverted to its pre-protection switching state illustrated in FIGURE 8. Specifically, protection traffic stream 326 is terminated, protected traffic stream 320 is resumed (if it was terminated), and preemtable traffic stream 322 is resumed.

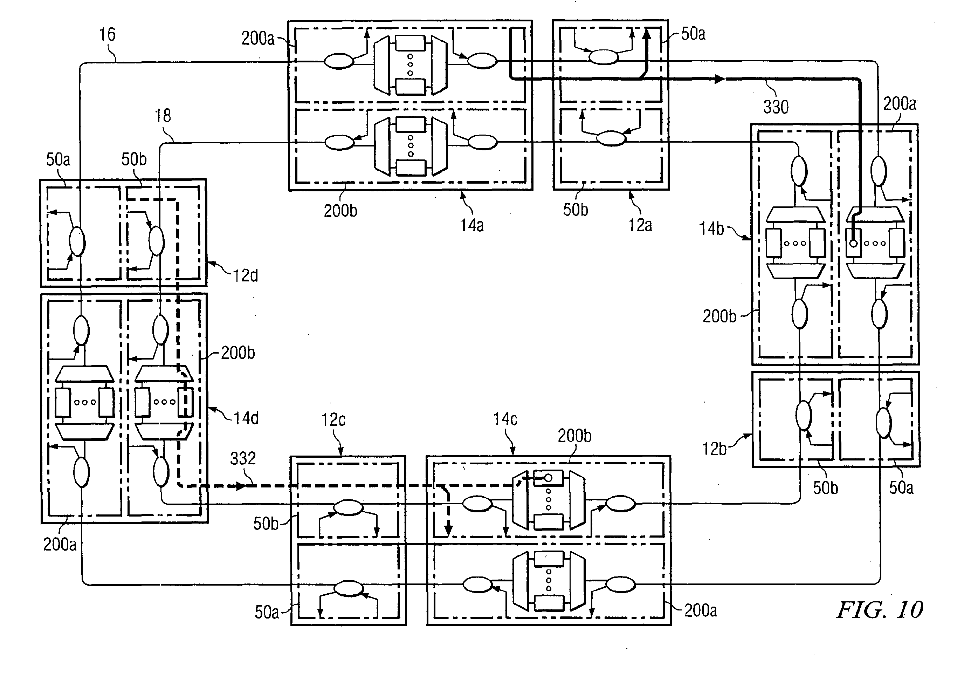

FIGURE 10 is a block diagram illustrating example protected and preemptable signals in an example optical network in accordance with another embodiment of the present invention. These example optical signals illustrate another implementation of an OSPPR network. FIGURE 10 illustrates that a protected traffic stream may originate from a gateway 14, as well as from an ADN 12 (as is illustrated in FIGURE 8). In FIGURE 10, for ease of reference, only high-level details of ADNs 12 and gateways 14 are shown. The reference numbers used below to reference the various components of ADNs 12 and gateways 14 are with reference to FIGURES 2, 4, and/or 5.

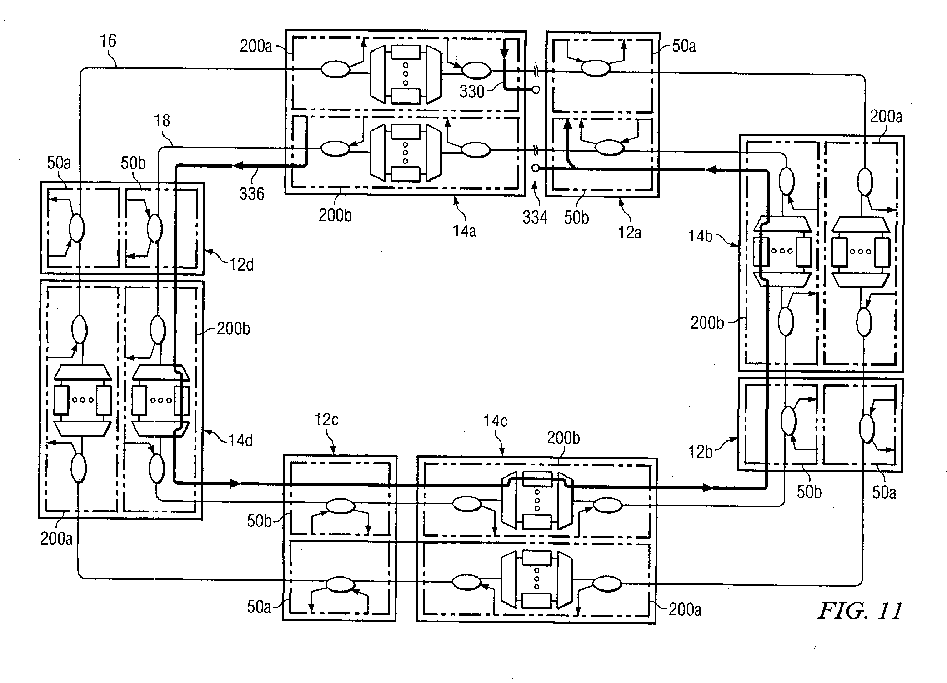

In the illustrated embodiment, two different traffic streams 330 and 332 are shown. Stream 330 is a protected traffic stream and stream 332 is a preemtable traffic stream. During normal operations, protected traffic stream 330 travels around clockwise ring 16. It originates from gateway 14a and is destined for ADN 12a. In the illustrated embodiment, protected traffic stream 330 is transmitted in wavelength λ₁. Preemtable traffic stream 332, which travels around counterclockwise ring 18, originates from ADN 12d and is destined for gateway 14c. In the illustrated embodiment, preemtable traffic stream 332 is also transmitted in wavelength λ₁. As is shown in FIGURE 11, traffic stream 332 may be interrupted during protection switching to protect the higher-priority traffic stream 330.

Although a single protected traffic stream 330 and a single preemptable traffic stream 332 are illustrated, it should be understood that multiple protected and/or preemptable traffic streams may be implemented in the same wavelength on the same ring through the use of subnets. In addition, although traffic in a single, example wavelength is illustrated, it will be understood that protected traffic and preemtable traffic are transmitted in numerous other wavelengths/channels in rings 16 and 18. Furthermore, although protected traffic is illustrated as being transmitted in the same wavelength as preemtable traffic (although on a different ring), numerous other configurations may be implemented. As an example only, protected traffic may be transmitted on ring 16 in odd-numbered channels and in even-numbered channels on ring 18. Preemtable traffic may be transmitted in ring 16 in even-numbered channels and in odd-numbered channels on ring 18. Any other suitable configurations may be used.

Protected traffic stream 330 is originated in a first wavelength, λ₁, at gateway 14a using a transmitter 104 associated with ring 16. Stream 330 is added to existing optical signals on ring 16 via the coupler 60 of gateway 14a that is associated with ring 16. After exiting gateway 14a, stream 330 travels via ring 16 to ADN 12a. The coupler 60 of ADN 12a associated with ring 16 drops stream 330, along with all other traffic on ring 16. Since stream 330 is destined for ADN 12a, a filter 100 of ADN 12a is configured to pass through stream 330. A receiver 102 associated with the filter 100 may then be used to receive stream 330 and forward the information in that stream to one or more clients of ADN 12a. Stream 330 is also forwarded by coupler 60 of ADN 12a, and travels to gateway 14b.

Coupler 60a of gateway 14b both drops and forwards traffic on ring 16 coming from ADN 12a (including stream 330). The forwarded traffic is demultiplexed by demultiplexer 206 of gateway 14b into its constituent wavelengths/channels, including stream 330 in λ₁. Demultiplexed stream 330 is forwarded from the demultiplexer 206 to its associated switch 210. The switch 210 is configured in the illustrated embodiment to terminate stream 330. Such termination is appropriate since traffic in stream 330 is destined for ADN 12a, which this traffic stream has already reached. The dropped stream 330 included in the traffic dropped from coupler 60a is similarly terminated by configuring filters 100 of gateway 14b to not pass through λ₁ to an associated receiver 102.

Preemtable traffic stream 332 is originated in the first wavelength, λ₁, at ADN 12d using a transmitter 104 associated with ring 18. Stream 332 is added to existing optical signals on ring 18 via the coupler 60 of ADN 12d that is associated with ring 18. After exiting ADN 12d, stream 332 travels via ring 18 to gateway 14d. Coupler 60a of gateway 14d both drops and forwards traffic on ring 18 coming from ADN 12d (including stream 332). The forwarded traffic is demultiplexed by demultiplexer 206 of gateway 14d into its constituent wavelengths/channels, including stream 332 in λ₁. Demultiplexed stream 332 is forwarded from the demultiplexer 206 to its associated switch 210. The switch 210 is configured in the illustrated embodiment to pass through stream 332 (since stream 332 has not reached its final destination). The dropped stream 332 included in the traffic dropped from coupler 60a is terminated by configuring the filters 100 to not pass through λ₁ to an associated receiver 102.

After exiting gateway 14d, stream 332 travels via ring 18 to ADN 12c. The coupler 60 of ADN 12c drops stream 332, along with all other traffic on ring 18. Since stream 332 is not destined for ADN 12c, none of the filters 100 of ADN 12c are configured to pass through stream 332. The coupler 60 of ADN 12c also forwards stream 332 on ring 18, and this forwarded stream 332 travels around ring 18 to gateway 14c. Coupler 60a of gateway 14c both drops and forwards traffic on ring 18 coming from ADN 12c (including stream 332). The dropped stream 332 included in the traffic dropped from coupler 60a is forwarded to one or more clients of gateway 14c by configuring a filter 100 of gateway 14c to pass through λ₁ to an associated receiver 102. The forwarded traffic is demultiplexed by demultiplexer 206 of gateway 14c into its constituent channels, including stream 332 in λ₁. Demultiplexed stream 332 is forwarded from the demultiplexer 206 to its associated switch 210. The switch 210 is configured in the illustrated embodiment to terminate stream 332 since stream 332 has reached its final destination (gateway 14c). This termination of stream 332 prevents it from reaching ADN 12d and thus interfering with the stream 332 being added to ring 18 at ADN 12d.

Therefore, as with the network illustrated in FIGURE 8, the network illustrated in FIGURE 10 may be used to communicate different information on different rings using the same wavelength. In addition, subnets could also be implemented to communicate different information on the same ring using the same wavelength. Furthermore, since some of this traffic (in the example above, the traffic stream 332 on ring 18) is deemed preemtable, OSPPR protection can be implemented in the case of a failure in ring 16 and/or ring 18, as described below.

FIGURE 11 is a block diagram illustrating protection switching and light path protection of the traffic stream 330 of FIGURE 10 in accordance with one embodiment of the present invention. As with the embodiment illustrated in FIGURE 9, in the event of a line cut or other interruption, an alternate light path is created for protected traffic streams that are prevented from reaching their destination node(s) due to the interruption. In the illustrated example, preemtable traffic stream 332 illustrated in FIGURE 10 needs to be terminated to provide an alternative light path over ring 18 (since this traffic stream is carried in λ₁ in the protection path). However, as previously noted, it will be understood that other divisions of traffic may be utilized without departing from the scope of the present invention.

In the illustrated example, a line cut 334 prevents traffic stream 330 from reaching its destination node (ADN 12a) via ring 16. This problem may be detected by one or more nodes or other equipment in network 10 and may be reported to NMS 126. NMS 126 may direct, pursuant to the OSPPR protection switching protocol of this embodiment, the termination of preemtable traffic stream 332 to free the use of λ₁ in ring 18 for protection traffic. After the preemtable traffic stream has been terminated, NMS 126 may direct gateway 14a to begin transmitting the same content as stream 330 in a new stream 336 via ring 18.

The new protection stream 336 containing the same content as stream 330 is originated in wavelength λ₁ at gateway 14a using a transmitter 104 associated with ring 18 (although in other embodiments, a single transmitter may transmit the same signal over both rings 16 and 18). Stream 336 is added to existing optical signals on ring 18 via the coupler 60 of gateway 14a that is associated with ring 18. After exiting gateway 14a, stream 336 travels via ring 18 to ADN 12a, passing through each of ADNs 12d, 12c, and 12b as well as through gateways 14d, 14c, and 14b. The manner in which stream 336 is passed through these nodes 12 and 14 is evident based on the description above.

The coupler 60 of ADN 12a drops stream 336, along with all other traffic on ring 18. Since stream 336 is destined for ADN 12a, a filter 100 of ADN 12a is configured to pass through stream 336. A receiver 102 associated with the filter 100 may then be used to receive stream 336 and forward the information in that stream to an appropriate client of ADN 12a. The coupler 60 of ADN 12a also forwards stream 336 on ring 18. This forwarded stream 336 travels around ring 18 until is reaches fault 334, where it terminates. In this way, an alternate path from ADN 12d to ADN 12a is created without creating interference with other traffic. After repair of fault 334, the network is reverted to its pre-protection switching state illustrated in FIGURE 10. Specifically, protection traffic stream 336 is terminated, protected traffic stream 330 is resumed (if it was terminated), and preemtable traffic stream 332 is resumed. It should be noted that the mux/demux unit 214 of gateway 14a is configured during protection switching to terminate stream 336 in λ₁. Although fault 334 in ring 18 prevents stream 336 from reaching gateway 14a, the termination of stream 336 by gateway 14a is needed for the period after which fault 334 is repaired but before the network reverts to its pre-protection switching state (to prevent interference with stream 336 being added to ring 18 at ADN 12d).

Although the present invention has been described with several embodiments, various changes and modifications may be suggested to one skilled in the art. It is intended that the present invention encompass such changes and modifications as fall within the scope of the appended claims.

## Claims

1. An optical network, comprising:
an optical ring operable to carry optical traffic in a plurality of wavelengths;
a plurality of passive add/drop nodes coupled to the optical ring, the passive add/drop nodes each comprising an optical coupler coupled to the optical ring and operable to receive the optical traffic on the optical ring and to both passively drop a copy of the optical traffic and passively forward a copy of the same optical traffic along the optical ring, wherein the add/drop nodes do not terminate any portion of the optical traffic forwarded by the optical coupler;
a plurality of gateway nodes, the gateway nodes each coupled to the optical ring and operable to selectively pass or terminate each wavelength of the optical traffic; and
wherein the passive add/drop nodes and the gateway nodes are coupled to the optical ring such that none of the passive add/drop nodes are adjacent to one another in the optical ring.

2. The optical network of Claim 1, wherein the optical coupler of each passive add/drop node is further operable to passively add traffic to the optical ring.

3. The optical network of Claim 1, wherein each passive add/drop node further comprises a second optical coupler operable to passively add traffic to the optical ring from one or more clients of the passive add/drop node.

4. The optical network of Claim 1, wherein the optical ring comprises a first optical fiber carrying traffic in a first direction and a second optical fiber carrying traffic in a second direction, opposite of the first direction.

5. The optical network of Claim 1, wherein each passive add/drop node is operable to add and drop optical traffic independent of the channel spacing of the optical traffic.

6. The optical network of Claim 1, wherein each gateway node comprises a multiplexer/demultiplexer unit coupled to the optical ring, the multiplexer/demultiplexer unit comprising:
a demultiplexer operable to demultiplex the optical traffic into its constituent wavelengths;
a plurality of switches, each switch operable to selectively forward or terminate the traffic in a particular wavelength; and
a multiplexer operable to receive and combine the traffic forwarded from the switches.

7. The optical network of Claim 6, wherein each gateway node further comprises:
a first optical coupler coupled to the optical ring and operable to receive the optical traffic, to forward a first copy of the received traffic to the multiplexer/demultiplexer unit, and to forward a second copy of the received optical traffic to one or more clients of the gateway node; and
a second optical coupler coupled to the optical ring and operable to receive the forwarded traffic combined by the multiplexer, to receive traffic from one or more clients of the gateway node, and to combine the traffic from the multiplexer with the traffic from the clients for forwarding on the optical ring.

8. A method of for communicating optical traffic, comprising:
providing an optical ring having a plurality of passive add/drop nodes and a plurality of gateway nodes coupled to the optical ring such that none of the passive add/drop nodes are adjacent to one another in the optical ring, the optical ring operable to carry optical traffic in a plurality of wavelengths;
using an optical coupler of one or more of the passive add/drop nodes, passively dropping a copy of the optical traffic from the optical ring and passively forwarding a copy of the same optical traffic along the optical ring without terminating any portion of the forwarded optical traffic; and
at each of the plurality of gateway nodes, selectively passing or terminating each wavelength of the optical traffic.

9. The method of Claim 8, further comprising passively adding traffic to the optical ring using the optical coupler of one or more passive add/drop nodes.

10. The method of Claim 8, further comprising passively adding traffic to the optical ring from one or more clients of one or more the passive add/drop nodes using a second optical coupler of each of the passive add/drop nodes.

11. The method of Claim 8, wherein the optical ring comprises a first optical fiber carrying traffic in a first direction and a second optical fiber carrying traffic in a second direction, opposite of the first direction.

12. The method of Claim 8, wherein each passive add/drop node is operable to add and drop optical traffic independent of the channel spacing of the optical traffic.

13. The method of Claim 8, wherein selectively passing or terminating each wavelength comprises:
demultiplexing the optical traffic into its constituent wavelengths;
selectively forwarding or terminating the traffic in each wavelength at a switch associated with each wavelength; and
multiplexing the traffic forwarded from the switches.

14. The method of Claim 8, further comprising:
passively dropping the optical traffic from the optical ring to one or more clients of at least one of the gateway nodes using a first optical coupler of the gateway node; and
passively adding traffic to the optical ring from one or more of the clients of the gateway node using a second optical coupler of the gateway node.
